Europäisches Patentamt

European Patent Office

Office européen des brevets

(19)

(11) **EP 0 641 096 B1**

(12) **FASCICULE DE BREVET EUROPEEN**

(45) Date de publication et mention
de la délivrance du brevet:
**20.11.2002   Bulletin 2002/47**

(51) Int Cl.⁷: **H04J 1/06**, H04L 5/06,
H04J 1/08

(21) Numéro de dépôt: **94460030.3**

(22) Date de dépôt: **22.08.1994**

(54) **Procédé d'accès multiple par répartition en fréquences orthogonales, station centrale, station répartie, système et utilisation correspondants**

Verfahren mit mehrfachem Zugang durch Einteilung in orthogonale Frequenzen, entsprechende zentrale Station, entfernte Station, System und deren Verwendung

Method with multiple access by orthogenal frequencies, corresponding central station, remote station, system and their use

(84) Etats contractants désignés:
**DE GB NL**

(30) Priorité:  **24.08.1993  FR 9310339**

(43) Date de publication de la demande:
**01.03.1995   Bulletin 1995/09**

(73) Titulaires:
• **FRANCE TELECOM**
  **75015 Paris (FR)**
• **TELEDIFFUSION DE FRANCE**
  **75732 Paris Cédex 15 (FR)**

(72) Inventeur: **Pace, Daniel**
  **F-35700 Rennes (FR)**

(74) Mandataire: **Vidon, Patrice**
  **Cabinet Patrice Vidon**
  **Le Nobel (Bât. A)**
  **Technopôle Atalante**
  **2, allée Antoine Becquerel**
  **BP 90333**
  **35703 Rennes Cedex 7 (FR)**

(56) Documents cités:
  **WO-A-93/14585**          **US-A- 5 025 442**

• **EBU TECHNICAL REVIEW, Août 1987, BELGIUM pages 168 - 190 R. LASSALLE ET AL. 'PRINCIPLES OF MODULATION AND CHANNEL CODING FOR DIGITAL BROADCASTING FOR MOBILE RECEIVERS'**

EP 0 641 096 B1

**Description**

Le domaine de l'invention est celui de la transmission de données numériques depuis une pluralité de stations réparties vers une station centrale.

Plus précisément, l'invention concerne un procédé d'accès multiple, dans lequel plusieurs stations, réparties de façon aléatoire à l'intérieur d'une zone de service, peuvent, de manière simultanée, entrer en communication avec au moins une station centrale sans que ces communications n'interfèrent entre elles.

Le problème principal rencontré dans les systèmes d'accès multiple est celui du chevauchement des informations émises par plusieurs stations réparties. Plusieurs solutions ont déjà été proposées, mais présentent toutes des inconvénients. On connaît notamment les techniques d'accès multiple dites AMRF, AMRT ou AMRC.

L'accès multiple par répartition en fréquence (AMRF) a été le premier système historiquement utilisé. Son principe consiste à séparer les communications à transmettre en attribuant à chacune une bande de fréquence spécifique, qui peut aisément être séparée des autres par filtrage à la réception. L'AMRF est un système qui fonctionne bien et permet d'assurer une bonne séparation des canaux. En particulier, il permet d'adapter la largeur du canal, et donc la puissance émise, au débit d'informations à transmettre.

Il présente cependant un inconvénient majeur. En effet, il est nécessaire d'avoir un récepteur par canal de transmission utilisé, obligeant de ce fait à disposer un nombre considérable de récepteurs dans la station centrale si on veut être capable de converser simultanément avec un nombre important de stations réparties.

On comprend aisément que, par exemple, une station centrale susceptible de gérer un millier de communications est difficilement envisageable, tant du point de vue de la complexité technique (il faudrait contrôler en parallèle un millier de récepteurs similaires), que du point de vue économique.

Ce problème a conduit à un abandon relatif de cette technique. L'AMRT (Accès Multiple à Répartition dans le Temps) est un système dont le principe consiste à partager temporellement la totalité du canal de transmission : pour éviter que les informations ne se chevauchent, il n'y a qu'une seule station qui émet à la fois et, quand elle émet, elle occupe la totalité du canal. Il existe plusieurs versions d'AMRT et notamment :

- l'AMRT à accès aléatoire, où chaque émetteur émet dès qu'il a quelque chose à transmettre, et s'assure ensuite que son message est bien passé à l'aide d'une retransmission miroir assurée par la station centrale : lorsque cette retransmission miroir ne correspond pas à ce qui a été émis, il répète le message. De tels systèmes sont assez simples, mais conduisent à un gaspillage important de capacité, du fait de la retransmission ;
- l'AMRT synchrone, où les émetteurs n'occupent le canal que pendant un intervalle de temps qui leur est alloué à l'intérieur d'une trame temporelle distribuée par la station centrale. Ce type d'AMRT est plus performant que le précédent, mais il reste toutefois soumis à des limitations quand le nombre de stations et les temps de propagation augmentent parallèlement.

En outre, ces deux systèmes d'AMRT posent de difficiles problèmes d'égalisation quand le canal de transmission est perturbé par des échos ou des brouilleurs.

Par ailleurs, tous ces systèmes d'AMRT demeurent caractérisés par le fait que chaque station qui émet occupe pendant un court instant la totalité du canal, ce qui peut nécessiter des puissances émises instantanées importantes. Chaque station répartie doit donc disposer d'une puissance crête élevée, qui n'est que momentanément utilisée.

On connaît enfin la technique d'accès multiple à répartition de code (AMRC). Il s'agit d'un système qui fait appel aux techniques d'étalement de spectre à séquences directes. Le signal à transmettre, sous forme numérique $[E_n]$ et de débit d, est mélangé bit à bit à une séquence pseudo-aléatoire $[G_i]$, de débit D très supérieur, choisie parmi un ensemble de séquences $[G_n]$ orthogonales entre elles. La récupération du signal est obtenue en mélangeant le signal reçu à la même séquence $G_i$ que celle d'émission. On a les relations :

- signal à transmettre : $E_n$
- signal émis : $E_n \otimes G_i$
- décodage à la réception : $(E_n \otimes G_i) \otimes G_j = 0$ si $i \neq j$
  $= E_n$ si $i = j$

La séparation entre les signaux des stations réparties est ici obtenue par l'orthogonalité des séquences pseudo-aléatoires de mélange (ainsi qu'à l'associativité

de l'opération "Ou Exclusif' - $\otimes$ -). Les systèmes d'AMRC réalisent une sorte de compromis entre l'AMRF et l'AMRT. Les propriétés des séquences $G_i$ utilisées (codes de longueurs maximales) leur confèrent en outre une bonne protection contre les brouilleurs et les échos. Ils conservent cependant trois défauts qui les rendent difficilement utilisables dans beaucoup de configurations d'accès multiple :

- l'efficacité spectrale est en général faible car, pour avoir un brouillage tolérable entre stations, on doit satisfaire à la relation :

$$D/d > (N-1)(E_b/N_0)_{min}$$

soit :

$$D/(N-1)d > (E_b/N_0)_{min}$$

où $(E_b/N_0)_{min}$ est le rapport signal à bruit à maintenir pour atteindre un T.E.B. suffisant. En général, cette quantité est comprise entre 3 et 10, ce qui signifie que le débit nécessaire D est 3 à 10 fois plus important que le débit utile Nd ;

- la séquence Gi de réception doit être synchronisée avec celle émise, et la synchronisation nécessite un certain temps, d'autant plus long en moyenne que la séquence Gi est longue et protège mieux contre les brouilleurs et les échos. Autrement, cette synchronisation doit être transmise par un autre moyen ;
- la station centrale doit pouvoir utiliser simultanément autant de séquences Gi différentes qu'il y a d'émissions simultanées, ce qui complique sensiblement les équipements dans le cas de stations réparties nombreuses.

L'invention a notamment pour objectif de pallier les inconvénients énumérés ci-dessus des techniques d'accès multiple connues.

Plus précisément, un objectif de l'invention est de fournir un procédé d'accès multiple à au moins une station centrale par un jeu d'au moins deux stations réparties dans lequel le fonctionnement d'une station centrale est simplifié, même en présence d'un nombre élevé de stations réparties. En particulier, l'invention a pour objectif de fournir un tel procédé, selon lequel la complexité des stations centrales n'augmente pas linéairement avec le nombre de stations réparties.

En d'autres termes, un des objectifs de l'invention est de fournir un tel procédé permettant de réaliser des stations centrales peu complexes, et donc peu coûteuses, quel que soit le nombre des stations réparties contrôlées par ces stations centrales.

Un objectif particulier de l'invention est de fournir un tel procédé, permettant la réception d'une très grande quantité de stations réparties par une unique station centrale, par exemple de l'ordre de quelques milliers.

Un autre objectif de l'invention est de fournir un tel procédé, dans lequel les signaux émis par plusieurs stations réparties peuvent être reçus simultanément, sans que des procédures particulières d'allocation d'intervalles de temps soient nécessaires.

L'invention a encore pour objectif de fournir un tel procédé, selon lequel chaque station répartie est particulièrement simple à réaliser, et donc peu coûteuse.

En particulier, un objectif de l'invention est de fournir un tel procédé, ne nécessitant, dans les stations réparties, qu'une faible puissance d'émission, notamment par rapport à celle nécessaire dans les procédés AMRT.

Un autre objectif de l'invention est de fournir un tel procédé présentant une grande efficacité spectrale. En d'autres termes, l'invention a pour objectif de fournir un tel procédé, mettant en oeuvre un bande de fréquence de largeur limitée, par rapport aux procédés connus et pour un même débit.

Dans différents modes de réalisation, l'invention a encore pour objectifs de fournir un tel procédé :

- offrant une grande robustesse aux perturbations du canal de transmission même en présence de bruits, de multitrajets, d'évanouissement...
- permettant la réalisation de communications bi-directionnelles entre la station centrale et des stations réparties ;
- permettant la réalisation de réseaux cellulaires en utilisant la même bande de fréquence dans chaque cellule ;
- permettant une adaptation du débit alloué à chaque station répartie en fonction des besoins et/ou de la disponibilité ;

Ces objectifs, ainsi que d'autres qui apparaîteront par la suite, sont atteints selon l'invention à l'aide d'un procédé d'accès multiple à une station centrale par un jeu d'au moins deux stations réparties, comprenant les étapes suivantes :

- affectation à chacune desdites stations réparties d'au moins une fréquence porteuse sélectionnée parmi une pluralité de fréquences porteuses orthogonales ;
- dans chacune desdites stations réparties, génération, modulation et émission de manière synchronisée de chacune desdites fréquences porteuses qui lui est affectée par une succession d'éléments de modulation numériques représentatifs d'un signal source ;

- réception, dans ladite station centrale, d'un signal unique correspondant au multiplex de fréquences orthogonales formé par l'ensemble des fréquences porteuses modulées et émises par ledit jeu de stations réparties ;
- démodulation dudit signal unique comprenant au moins une transformation mathématique temps-fréquence.

Ainsi, selon l'invention, la station centrale traite un signal unique. Une seule opération de démodulation (comprenant notamment au moins une transformation mathématique) est nécessaire, quel que soit le nombre de stations réparties.

Il est à noter que les signaux émis et reçus s'analysent de façon différentes. En effet, chaque station répartie n'émet qu'une ou qu'un petit nombre de fréquences porteuses. Ainsi, leur réalisation est relativement simple, et la puissance nécessaire est limitée. En revanche, vu de la station centrale, le signal est un multiplex de fréquences orthogonales. Le signal reçu n'existe pas entièrement dans chaque station répartie, mais se construit durant la transmission, par combinaison des signaux émis.

Pour que cette combinaison forme effectivement un multiplex de fréquences porteuses orthogonales, le procédé de l'invention comprend avantageusement les étapes suivantes :

- utilisation par chacune desdites stations réparties d'une fréquence de référence unique, et
- synthèse, dans chacune desdites stations réparties, de chacune desdites fréquences porteuses affectées, à partir de ladite fréquence de référence.

De cette façon, on assure une bonne synchronisation fréquentielle des fréquences porteuses formant le multiplex reçu par une station centrale.

Par utilisation, on entend ici soit la récupération directe de la fréquence nécessaire à la synthèse, soit la déduction de cette fréquence, à partir d'une fréquence de référence quelconque.

Par ailleurs, le procédé comprend préférentiellement les étapes suivantes :

- diffusion vers l'ensemble desdites stations réparties d'un signal de synchronisation unique, et
- synchronisation, dans chacune desdites stations réparties, de l'émission desdits éléments de modulation modulant chacune desdites fréquences porteuses affectées, à partir dudit signal de synchronisation.

Ainsi, les rythmes d'émission de chaque station répartie sont identiques, et les instants de début d'émission dans lesdites stations réparties sont décalés d'une durée qui dépend du temps de propagation entre la station centrale et les stations réparties.

A la réception par ladite station centrale, lesdits instants de début d'émission seront décalés d'une durée sensiblement double de celle dudit décalage à l'émission par lesdites stations réparties, par suite du temps de propagation aller-retour.

Pour compenser cedit décalage dans la station centrale, le traitement desdits symboles de données ne commence qu'après un temps de garde dont la durée est supérieure à ce décalage, tout en restant inférieure à la durée dudit rythme d'émission.

Avantageusement, ledit signal de synchronisation porte au moins une des informations appartenant au groupe comprenant :

- une synchronisation symbole, indiquant la durée et/ou l'instant de début d'émission de chacun desdits éléments de modulation, les éléments de modulation émis simultanément par l'ensemble desdites stations réparties formant un symbole de données constitué d'un multiplex de fréquences orthogonales, vu de ladite station centrale ;
- une synchronisation trame, correspondant à une organisation en trames desdits symboles.

Par élément de modulation, on entend le ou les éléments binaires ou, plus généralement, Q-aires (selon la modulation mise en oeuvre) portés par une desdites fréquences porteuses. Un symbole est formé par l'ensemble des fréquences porteuses orthogonales, modulées chacune par un élément de modulation distinct.

Dans un mode de réalisation préférentiel de l'invention ladite fréquence de référence est constituée par une fréquence pilote modulée en modulation numérique linéaire par ledit signal de synchronisation.

Ainsi, la fréquence pilote permet simultanément les synchronisations fréquentielle et temporelle des stations réparties.

Selon d'autres modes de réalisation, ladite fréquence de référence et/ou ledit signal de synchronisation est un signal diffusé par un système appartenant au groupe comprenant :

- un signal de référence émis par ladite station centrale ;
- une fréquence porteuse d'un système de diffusion de signaux de son et/ou d'images ;
- une fréquence d'horloge d'un système de téléphonie ;
- une fréquence de référence d'un système de distribution du temps.

Dans les trois derniers cas, la synchronisation fréquentielle et/ou temporelle n'est pas assurée par la station centrale de base, mais par un système indépendant. Par exemple, ledit signal de synchronisation est un signal de synchronisation de ligne et/ou de trame d'image d'un signal de télévision, et en ce que la durée d'un symbole est un multiple de la durée d'une ligne et/ou un sous-multiple de la durée d'une trame d'image.

Dans un mode réalisation particulier de l'invention, ladite étape d'affectation comprend les étapes suivantes :

- réorganisation de ladite affectation desdites fréquences porteuses ;
- diffusion vers l'ensemble desdites stations réparties d'une information représentative de l'affectation réorganisée.

Cette réaffectation permet d'allouer des ressources aux stations réparties en fonction des besoins, des disponibilités, des priorités,...

Par exemple, ladite étape de réorganisation tient compte d'au moins un des critères appartenant au groupe comprenant :

- quantité d'information devant être émise par au moins une desdites stations réparties ;
- quantité d'information devant être émise par l'ensemble desdites stations réparties ;
- niveau de priorité affecté à au moins une desdites stations réparties ;
- capacité du canal de transmission, vu de ladite station centrale.

Ladite étape de réorganisation peut également être cyclique.

Il est ainsi possible de lutter contre les phénomènes d'évanouissement du canal de transmission. La durée du cycle est adapté au type d'application. Si les stations réparties sont fixes, elle peut être de l'ordre de la journée, voire du mois. En revanche, s'il s'agit de stations mobiles, cette réallocation sera préférentiellement pratiquement permanente, de façon à créer de la diversité de fréquence (principe de l'entrelacement en fréquence).

Le procédé de l'invention permet de réaliser des systèmes bi-directionnels. Il comprend alors une étape de transmission de données d'au moins une desdites stations centrales vers au moins une desdites stations réparties.

Dans ce cas, ladite étape de transmission comprend avantageusement, au moins une des étapes appartenant au groupe comprenant :

- une étape de diffusion d'un signal numérique porté par une fréquence porteuse-unique ;
- une étape de diffusion d'un signal numérique porté par un multiplex de fréquences porteuses orthogonales ;
- une étape de diffusion de données télétexte inclues dans un signal de télévision.

Selon un mode de réalisation avantageux un unique multiplex de fréquences orthogonales peut être mis en oeuvre, les communications entre une station centrale et des stations réparties étant alors des communications à l'alternat.

Par ailleurs, le procédé de l'invention peut encore comprendre les étapes suivantes :

- affectation à chacune desdites stations réparties d'au moins un intervalle de temps sélectionné parmi une pluralité d'intervalles de temps formant un cycle de transmission,
- émission, par chacune desdites stations réparties, uniquement durant le ou les intervalles de temps de chaque cycle qui lui sont affectés.

En d'autres termes, l'invention peut également mettre en oeuvre les principes connus de la répartition AMRT. De cette façon, il est possible d'accroître encore le nombre des stations réparties reçues par une station de base, jusqu'à plusieurs dizaines de milliers.

Dans un mode de réalisation avantageux, le procédé comprend également une étape d'égalisation, dans au moins une desdites stations réparties, consistant à contrôler le niveau de puissance d'émission de façon que le signal unique reçu par ladite station centrale présente un niveau de puissance sensiblement homogène.

Préférentiellement, ladite étape d'égalisation comprend les étapes suivantes :

- émission régulière, par ladite station centrale, d'un signal de commande d'augmentation de puissance, vers une desdites stations réparties, tant que le niveau de puissance d'émission de celle-ci est insuffisant ;

- augmentation de la puissance d'émission, dans ladite station répartie, tant qu'elle reçoit ledit signal de commande d'augmentation de puissance.

Par ailleurs, il est avantageux, dans certaines situations, que le procédé comprenne, dans au moins une station répartie, une étape d'estimation du temps de propagation des signaux entre une station centrale et ladite station répartie, délivrant une estimation de distance entre ladite station centrale et ladite station répartie.

Cette estimation de distance peut notamment être utilisée dans au moins une des étapes appartenant au groupe comprenant les étapes suivantes :

- contrôle de la puissance d'émission ;
- contrôle des instants d'émission, de façon que ledit signal unique reçu par une station centrale soit constitué de fréquences porteuses modulées par lesdits éléments de modulation de façon sensiblement synchronisée.

Ce dernier cas est en particulier applicable lorsque les distances entre les stations réparties et la station centrale présentent de grandes différences, et par exemple dans le cas d'un système de transmission par satellite. Il est alors souhaitable de contrôler indépendamment les instants d'émission de chaque station répartie, en fonction de la distance à parcourir.

Il est à noter que cette synchronisation n'est pas obligatoirement parfaite, si un intervalle de garde est ménagé entre chaque symbole. Celui-ci peut en effet absorber une partie du décalage entre les signaux reçus des différentes stations réparties.

Selon un premier mode de réalisation, ladite étape d'affectation à chacune desdites stations réparties d'au moins une fréquence porteuse affecte une fréquence porteuse unique à chaque station répartie.

Les stations réparties sont alors très simples, puisqu'une seule fréquence est modulée, et un grand nombre de stations réparties, par exemple de l'ordre du millier, peuvent émettre simultanément.

Selon un second mode de réalisation de l'invention, ladite étape d'affectation affecte un jeu d'au moins deux fréquences porteuses à chaque station répartie.

Dans ce cas, au prix d'une légère augmentation de la complexité, les stations réparties peuvent bénéficier d'un débit supérieur. Les fréquences porteuses allouées à chaque station répartie peuvent être voisines ou distribuées sur tout le spectre de fréquence. Cette dernière technique permet de limiter les problèmes d'évanouissement, en utilisant le principe de la diversité de fréquence.

Dans le cas d'un réseau de communication cellulaire comprenant au moins deux cellules géographiquement voisines, ledit jeu d'au moins deux fréquences porteuses affecté à chaque station répartie dans une première cellule est avantageusement choisi de façon à permettre la réutilisation desdites fréquences porteuses dans une seconde cellule voisine de ladite première voisine.

Dans le cas d'un canal de transmission susceptible d'être perturbé, le procédé comprend préférentiellement, dans au moins une desdites stations réparties, une étape préalable de codage canal, introduisant des redondances dans ledit signal source.

L'invention porte également sur chaque station répartie et chaque station centrale mettant en oeuvre le procédé décrit ci-dessus, ainsi que sur tout système de communication comprenant de telles stations.

Elle peut notamment être mise en oeuvre pour :

- les réseaux de téléinformatique ;
- les réseaux de télécommunications ;
- les voies de retour des réseaux de télédiffusion ;
- les voies de retour des réseaux de vidéocommunications ;
- le radiotéléphone ;
- les réseaux de domotique ;
- les réseaux de radiocommunication.

D'autres caractéristiques et avantages de l'invention apparaîtront à la lecture de la description suivante d'un mode de réalisation préférentiel de l'invention, donné à titre de simple exemple illustratif et non limitatif, et des dessins annexés, dans lesquels :

- les figures 1A et 1B sont deux exemples de réseaux de communication comprenant une station centrale et une pluralité de stations réparties mettant en oeuvre le procédé d'accès multiple selon l'invention ;
- les figures 2 et 3 illustrent le principe de base de l'invention dans les cas, où, respectivement, les stations réparties de la figure 1 émettent chacune une ou plusieurs fréquences porteuses ;
- la figure 4 illustre le principe général d'une station répartie selon l'invention ;

**EP 0 641 096 B1**

- la figure 5 présente un exemple de réalisation du sous-ensemble d'émission de la station centrale des figures 1A et 1B ;
- la figure 6 illustre la structure temporelle du signal émis par la station centrale de la figure 5 ;
- la figure 7 est le schéma d'un exemple de réalisation du sous-ensemble de réception de la station centrale des figures 1A et 1B ;
- les figures 8 et 9 présentent respectivement des exemples de réalisation du sous-ensemble de réception et du sous-ensemble d'émission d'une station répartie des figures 1A et 1B ;
- la figure 10 est un synoptique général du procédé de l'invention, présentant les caractéristiques principales de l'invention ;
- la figure 11 illustre un exemple de station répartie, dans le cas particulier d'une application à la voie de retour d'un système de télévision.

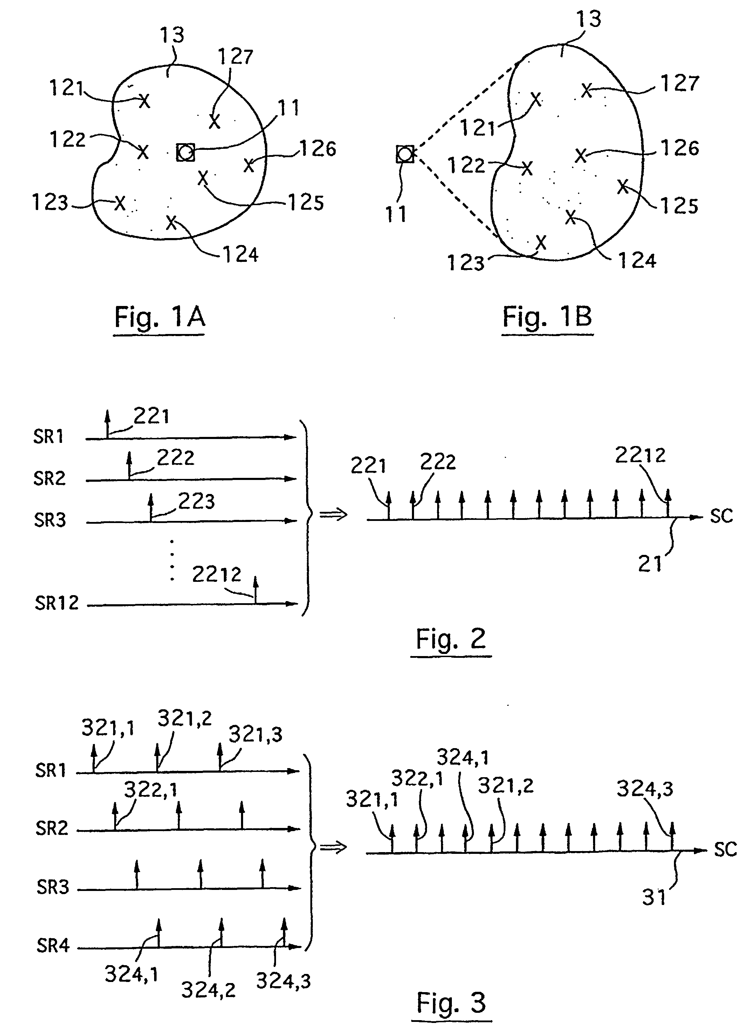

Ainsi que cela est illustré en figures 1A et 1B, l'invention concerne un procédé d'accès multiple entre une station centrale 11 (habituellement maîtresse) et des stations réparties $12_1$ à $12_7$ de façon aléatoire à l'intérieur d'une zone de service 13 définie par rapport à la station centrale 11.

Par accès multiple, il faut entendre que des stations réparties $12_1$ à $12_7$ peuvent entrer en communication avec la station centrale 13 de manière simultanée et sans que ces communications n'interfèrent entre elles, en utilisant le même canal de transmission.

Cette zone de service 13 correspond par exemple, selon les applications, à la zone de couverture d'une station d'émission hertzienne (cas par exemple de la voie de retour d'un système de télévision, décrit par la suite), à une cellule d'un réseau de radiocommunication, à un site industriel (cas des réseaux locaux d'entreprise), ou à une habitation (cas d'un réseau domotique).

Selon les cas, la station centrale 11 peut être sensiblement au centre de la zone 13 (cas de la figure 1A, correspondant par exemple à des communications hertziennes ou câblées) ou en dehors de cette zone de service 13 (cas de la figure 1B, correspondant par exemple à des communications par satellite).

Il est à noter que l'invention concerne essentiellement les transmission dans le. sens des stations réparties $12_1$ à $12_7$ vers la station centrale 13. Le système de l'invention peut donc être mono-directionnel (par exemple si les stations réparties sont des appareils de télémesure). Toutefois, dans la plupart des cas, un tel système est bi-directionnel. Dans ce cas, les transmissions dans le sens de la station centrale vers les stations réparties peuvent être de tout type connu, et par exemple mettre en oeuvre une modulation numérique monoporteuse classique ou utiliser un système de transmission télétexte inclus dans un signal de télévision ou encore mettre en oeuvre une modulation COFDM (Coded Orthogonal Frequency Division Multiplex (multiplexage de fréquences orthogonales codées)), telle que décrite notamment dans le brevet français FR-A-2601210 déposé le 2 juillet 1986 et dans le document "Principes de modulation et de codage canal en radiodiffusion numérique vers les mobiles" (M. Alard et R. Lassalle ; Revue de l'U.E.R, n° 224, août 1987, pp. 168-190).

La caractéristique essentielle de l'invention est la génération, dans chaque station répartie, d'un signal tel que la combinaison de tous les signaux émis forme, vu de la station centrale, un signal OFDM (Orthogonal Frequency Division Multiplex).

En d'autres termes, selon l'invention, une pluralité de signaux sont émis simultanément, selon une technique proche de l'AMRF, mais avec des bandes de fréquence se chevauchant partiellement (en respectant les principes d'orthogonalité). En revanche, la station centrale reçoit un unique signal OFDM. Elle comprend donc des moyens de réception et de démodulation uniques, quel que soit le nombre de signaux émis, c'est-à-dire le nombre de stations réparties. La réalisation de cette station centrale est donc particulièrement simplifiée, par rapport aux récepteurs AMRF classiques, qui nécessitent autant de démodulateurs qu'il y a de signaux émis.

Les figures 2 et 3 illustrent, sur deux exemples, le principe à la base de l'invention.

Le signal reçu 21 par la station centrale SC est constitué d'une pluralité de fréquences porteuses modulées $22_1$ à $22_{12}$. Sur ces figures 2 et 3, le nombre de porteuses à été réduit, par simplification, à 12. Toutefois, dans la pratique, il peut être de l'ordre de quelques centaines ou de quelques milliers.

Dans le cas de la figure 2, chaque station répartie SR1 à SR12 émet une unique fréquence $22_1$ à $22_{12}$ respectivement.

Le signal $s_i^k(t)$ émis par la station répartie portant le numéro i pendant la durée du symbole $b_k$ est représenté par :

$$s_i^k(t) = A_i(b_k)\cos[\omega_i T + \phi_i(b_k)]$$

où  $A_i(b_k)$ correspond à l'amplitude du signal pour le symbole $b_k$, et
$\phi_i(b_k)$ à sa phase pour le même symbole $b_k$ ;

7

$$\omega_i = 2\pi f_i = 2\pi(f_0 + \Delta f/2 + i\Delta f),$$

$f_i$ étant la fréquence porteuse affectée à la station répartie i,

avec i = 0, 2,..., N-1,

et $\Delta f = 1/t_s$, avec $t_s$ durée du symbole utile $b_k$.

La réalisation des stations réparties est alors très simple. Elles modulent, classiquement, une fréquence porteuse unique.

Dans l'exemple de la figure 3, chaque station répartie SR1 à SR4 se voit affecter plusieurs (3 dans cet exemple) fréquences porteuses $32_{1,1}$ à $32_{4,3}$. Cette technique présente notamment deux avantages :

- augmentation du débit alloué à chaque station répartie (proportionnellement au nombre de porteuses) ;
- augmentation de la robustesse de la transmission vis à vis des perturbations du canal de transmission (évanouissements sélectifs,...),notamment si les fréquences porteuses allouées à une station répartie sont distribuées sur l'ensemble de la bande disponible et si un codage introduisant une redondance est utilisé.

Avec les mêmes notations que ci-dessus, le signal $s_i^k(t)$ est alors représenté par :

$$s_i^k(t) = \sum_{j=1}^{P} A_{ij}(b_k)\cos[\omega_{ij}t + \phi_{ij}(b_k)]$$

en appelant p le nombre de porteuses simultanément utilisées par la station répartie i.

Dans l'exemple de la figure 3, p est le même pour toutes les stations réparties, p est un diviseur de N, nombre total de porteuses (p = N/m, p, N et m étant des entiers). Alors :

$$\omega_{ij} = 2\pi [f_0 + \Delta f/2 + (i+mj)\Delta f]$$

avec : i = 0,1,..., m-1

j = 0, 1,..., p-1.

Les stations réparties peuvent alors comprendre plusieurs modulateurs indépendants, pour chaque fréquence porteuse ou, avantageusement, effectuer la modulation selon la technique classiquement utilisée en COFDM, à l'aide d'une transformation de Fourier (éventuellement partielle).

Pour que le signal 41 reçu par la station centrale soit un signal OFDM exploitable, il faut que toutes les fréquences porteuses soient régulièrement réparties, et synchronisées en fréquence. Les éléments de modulation qu'elles portent synchronisées.

Plus précisément, il est nécessaire que l'espacement en fréquence $\Delta F$ des porteuses soit égal à $1/t_s$, où $t_s$ est la durée utile d'un symbole de modulation. Pour que cet écart soit respecté, c'est-à-dire pour que les fréquences soient générées de façon très précises, celles-ci sont asservies en fréquence sur une référence commune (synchronisation fréquentielle).

Le signal reçu à la station centrale est représenté dans tous les cas par :

$$x(t) = \sum_{i=0}^{N-1} A_i(b_k) * H_i(b_k)\cos[\omega_i t + \phi_i(b_k)]$$

En effet, que les stations réparties émettent une seule porteuse ou plusieurs, le total de celles-ci est toujours égal à N.

$H_i(b_k)$ représente la fonction de transfert du canal entre la station centrale et la station répartie considérée et pour la fréquence $f_i$, le système est conçu de telle façon que $H_i(b_k)$ soit constant durant la durée utile du symbole $b_k$, ainsi qu'il est précisé ci-dessous. Si $H_i(b_k)$ introduit un gain $\rho_i(b_k)$ et un déphasage $\theta_i(b_k)$, on peut écrire :

$$x(t) = \sum_{i=0}^{N-1} A_i(b_k) * \rho_i(b_k) \cos[\omega_i t + \phi_i(b_k) - \theta_i(b_k)]$$

et :

$$\omega_i = 2\pi (f_0 + \Delta f/2 + i\Delta f) \qquad i = 0,..., N-1.$$

La durée $t_s'$ d'un symbole de modulation est calculée de la manière suivante :

$$t_s' = t_s + \Delta t, \text{ avec } t_s = 1/\Delta f,$$

durée utile d'un symbole.

$\Delta t$ : intervalle de garde, supérieur à la dispersion possible entre les instants d'arrivée, à la station centrale, des symboles émis par les stations réparties.

Sauf utilisation d'un système d'évaluation des distances entre station centrale et stations réparties, mentionné ci-dessus, cette dispersion possible est égale au temps de propagation aller-retour entre la station centrale et la station répartie la plus éloignée, augmenté de la durée maximale de la réponse impulsionnelle du canal et de l'écart éventuel du temps de traitement du signal dans les stations réparties.

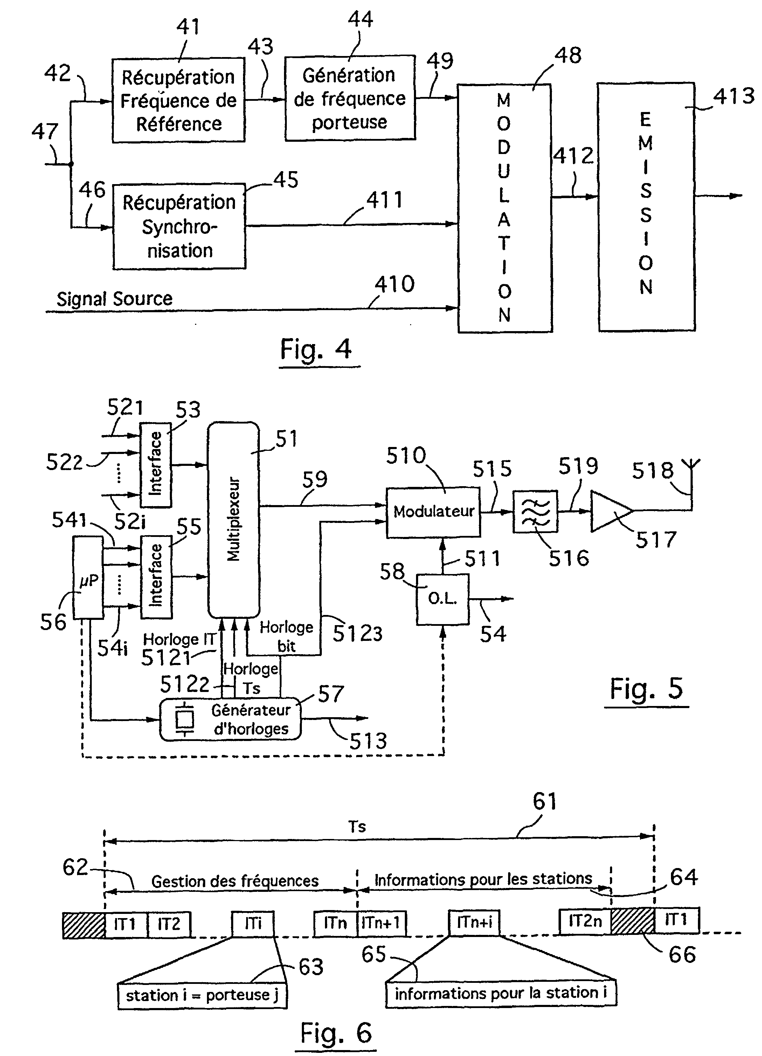

La figure 4 illustre le principe général d'une station répartie selon l'invention.

La station répartie comprend un module 41 de récupération de la fréquence de référence 42, ou fréquence pilote. Cette fréquence pilote 42, commune à toutes les stations réparties, peut être émise par la station centrale, ou être un signal indépendant (par exemple les signaux de synchronisation d'un système de distribution du temps).

A partir de la fréquence pilote récupérée 43, on génère (44) la (ou les) fréquences porteuses affectées à la station répartie.

On peut se passer de fréquence pilote en utilisant, pour la synthèse des fréquences porteuses, dans la station centrale et les stations réparties, des oscillateurs de référence très stables, eux-mêmes asservis par un système existant de distribution du temps, tel que les émissions d'Allouis, l'horloge du système de radiolocalisation GPS, ou la distribution de la fréquence d'horloge à 2,048 MHz du réseau téléphonique commuté. Ces émissions peuvent alors servir également à la synchronisation du temps symbole.

En effet, la station répartie comprend également un module 45 de récupération de la synchronisation, à partir d'une information 46 de synchronisation commune à toutes les stations. L'information 46 de synchronisation et la fréquence pilote 42 peuvent être portés par le même signal 47, ou être indépendant.

Un module 48 de modulation assure la modulation de la ou des fréquences porteuses générées (49) par le signal source 410, au rythme de l'horloge 411. Le signal modulé 412 est ensuite émis (413).

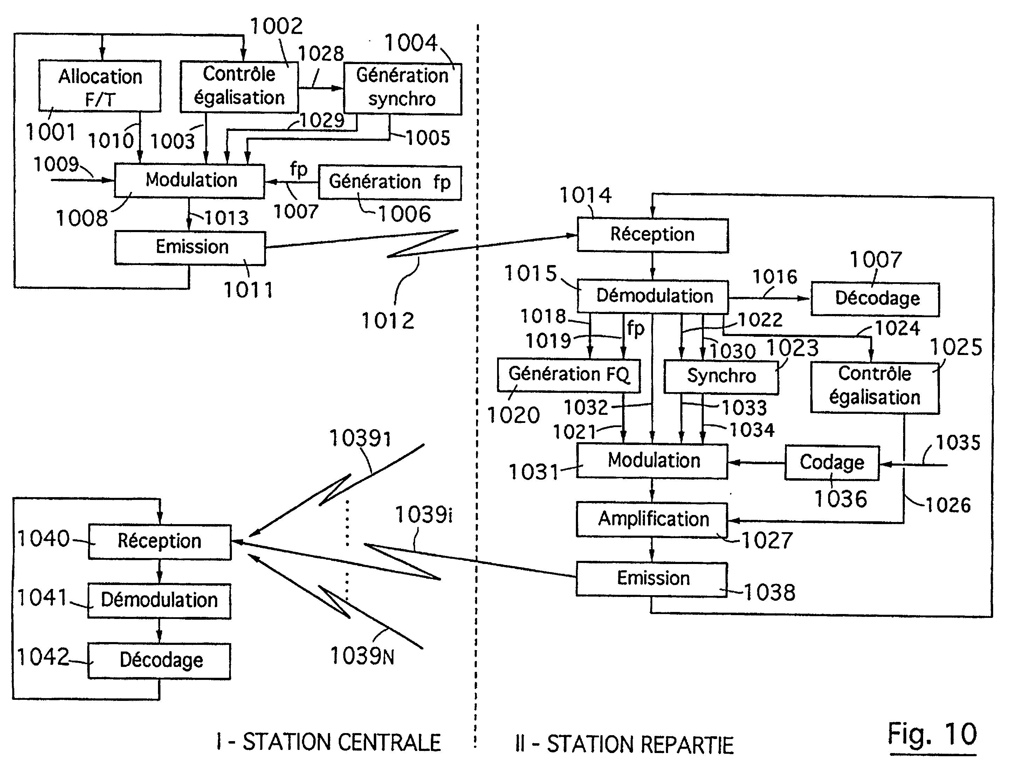

La figure 10 est un synoptique global du procédé d'accès multiple de l'invention, tel qu'il peut être mis en oeuvre dans les stations des figures 1A et 1B. Ce procédé est donc mis en oeuvre simultanément d'une part dans la station centrale I, et d'autre part dans toutes les stations réparties II (une seule d'entre elles étant représentée).

Afin de simplifier la description du procédé, il a été représenté sous la forme d'étapes successives. Il est clair que cependant dans la pratique, la plupart des opérations sont effectuées en parallèle.

Le procédé comprend donc, dans la station centrale, une étape 1001 d'allocation de fréquences porteuses et/ou d'intervalles de temps. Cette fonction alloue une ressource de transmission à chaque station répartie. Cette allocation consiste par exemple à une sélection d'une ou plusieurs fréquences porteuses et d'un ou plusieurs intervalles de temps, si un multiplexage AMRT est mis en oeuvre.

L'allocation en temps peut également gérer une liaison à l'alternat, les stations réparties et la station centrale émettant alors alternativement sur la même bande de fréquence.

Cette allocation peut être variable dans le temps, pour tenir compte des besoins de chaque station, du taux d'occupation de la ressource, d'éventuels niveaux de priorité...

La variation peut également être cyclique, pour assurer une diversité en fréquence, et ainsi combattre les évanouissements du canal de transmission. Si les stations réparties sont mobiles, cette variation est permanente.

Dans le cas d'une application à un réseau cellulaire (radiotéléphone, par exemple), l'allocation des fréquences peut être faite de façon à permettre la réutilisation de la même bande de fréquence dans la cellule voisine. Cela peut se faire en allouant à une station répartie un jeu de fréquences dont l'intersection avec le jeu de fréquences associé à chaque station dés cellules voisines est limitée le plus possible. Il est alors possible, si un codage redondant a été utilisé, de reconstruire l'ensemble des signaux émis.

Le procédé comprend également une étape 1002 de contrôle de l'égalisation, de façon que le signal reçu par la station centrale soit sensiblement homogène. Cette étape 1002 assure par exemple l'envoi continu d'un ordre 1003 d'augmentation de puissance à chaque station répartie jusqu'à ce que le signal correspondant soit reçu avec un niveau satisfaisant.

Une étape 1004 de génération de signaux de synchronisation délivre les horloges 1005 symbole et trame.

L'étape 1002 contrôle de l'égalisation informe l'étape de génération de synchronisation des temps de transmission 1028 (temps de réponse à un ordre) de chaque station répartie. En conséquence, une information 1029 de retard à appliquer à l'émission est transmise à chaque station répartie.

Enfin, une étape 1006 de génération de la fréquence pilote fp fournit cette fréquence fp 1007 à une étape de modulation, qui assure la modulation de fp par les informations source 1009 à transmettre aux stations réparties, et les informations 1010, 1003, 1005 et 1029 produites respectivement par les étapes 1001, 1002 et 1004.

Une étape 1011 d'émission classique assure la transmission 1012 (par voie hertzienne ou par câble) du signal modulé 1013.

Le signal transmis 1012 est reçu (1014) dans chaque station répartie, puis démodulé (1015). L'étape 1015 de démodulation délivre les informations suivantes :

- informations source 1016, qui sont décodées (1017), en fonction du codage mis en oeuvre dans la station centrale ;
- informations 1018 de répartition de fréquence et fréquence pilote fp 1019, qui sont utilisées dans l'étape 1020 de génération des fréquences à moduler 1021 ;
- horloges de synchronisation 1022 et information 1030 sur le retard à appliquer, alimentant une étape 1023 de synchronisation ;
- information 1024 de contrôle de l'égalisation, agissant l'étape 1025 de contrôle de l'égalisation, qui commande le niveau 1026 d'amplification de l'étape 1027 d'amplification ;
- information 1032 d'intervalle de temps d'émission, contrôlant l'étape 1031 de modulation.

Si l'information 1030 de retard n'est pas produite par la station centrale, l'étape 1023 de synchronisation peut comprendre une étape de radiolocalisation classique, pour déterminer les temps de transmission. Cette étape 1023 de synchronisation délivre à l'étape 1031 de modulation les horloges symbole 1033 et trame 1034.

Les données à transmettre 1035 sont codées (1036), puis modulent (1031) la ou les fréquences allouées 1021. Le codage 1036 est avantageusement un codage redondant, tel qu'un code convolutif ou un code du type de ceux décrits dans la demande de brevet française FR 91 05280 déposée le 23 avril 1991.

Le signal émis $1039_i$ est reçu (1040) dans la station centrale, conjointement aux autres contributions $1039_1$ à $1039_N$ des autres stations réparties, sous la forme d'un signal unique OFDM, ainsi que cela est illustré en figures 2 et 3. Ce signal OFDM est alors démodulé (1041), à l'aide d'au moins une transformation mathématique temps/fréquence (dans certaines situations, deux transformations peuvent être cascadées). Les données démodulées sont ensuite décodées (1042) en fonction du codage 1036 utilisé.

Des exemples de démodulation de signaux OFDM peuvent notamment être trouvées dans le brevet français FR-A-2 601 210 déposé et dans le document "Principes de modulation et de codage canal en radiodiffusion numérique vers les mobiles" (M. Alard et R. Lassalle) déjà cités.

Il est à noter que l'invention met en oeuvre des procédés déjà connus, et notamment :

- la transmission de données par multiplexage en fréquence et démodulation par une transformation de Fourier discrète (voir par exemple S. Darlington - "On digital single-sideband modulators" IEEE Transaction ou Circuit Theory - vol CT-17 -pp 409-414 Aug. 1970 ou S.B. Weinstein, P.M. Ebert - "Data transmission by Frequency-Division Multiplexing using the Discrète Fourier transform. IEEE Trans. ou Communication Technology - vol COM-19 n°5 pp 628-634 - Oct 71) ;
- l'utilisation de fréquences porteuses orthogonales (voir par exemple B. HIROSAKI - "An Orthogonally Multiplexed QAM system using the Discrète Fourier Transform. IEEE Trans. ou Communications vol COM-29 n°7 - pp 982-989 Jul.1981) ;
- la synchronisation par une porteuse de référence (voir par exemple I. Switzer "A harmonically related carrier system for cable television" IEEE Trans. ou Communications vol COM-23 pp 155-166 Jan. 75);
- la synchronisation des signaux transportés, par exemple dans les systèmes de télévision.

Cependant, la combinaison de ces procédés de la façon qui est proposée dans l'invention n'est pas évidente, et aboutit notamment à une propriété nouvelle qui ne découle directement d'aucun des procédés cités, à savoir la disponibilité d'un système d'Accès Multiple à Répartition en Fréquence entre une station centrale et au moins deux stations réparties dans lequel le signal reçu en station centrale peut être traité par un récepteur unique, effectuant une seule opération de démodulation.

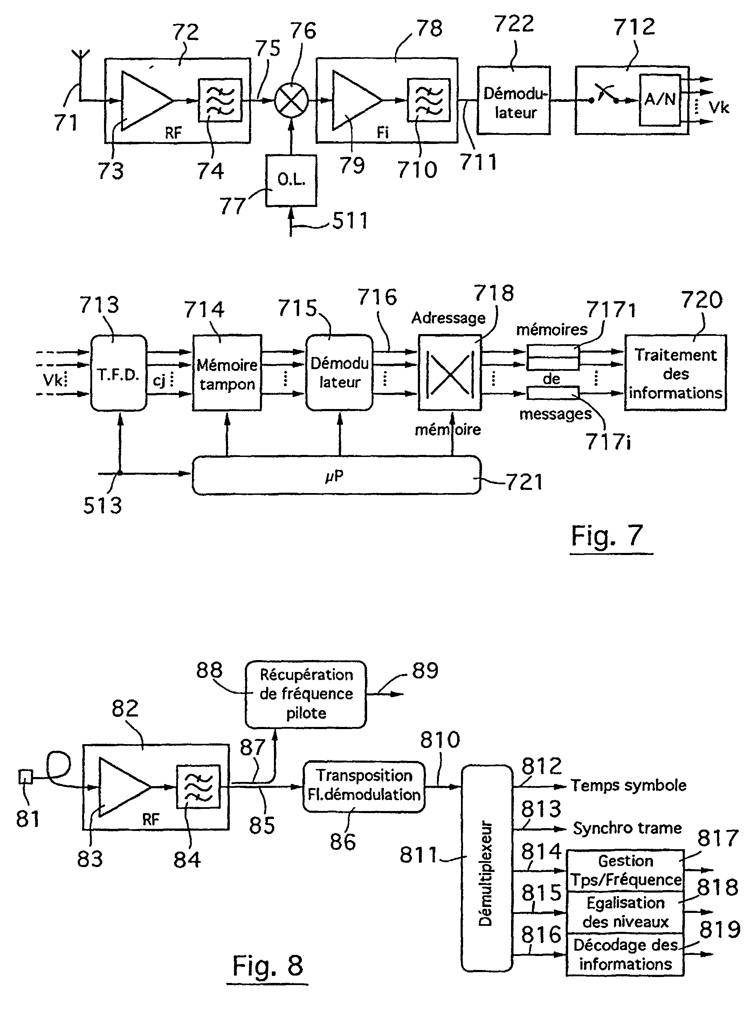

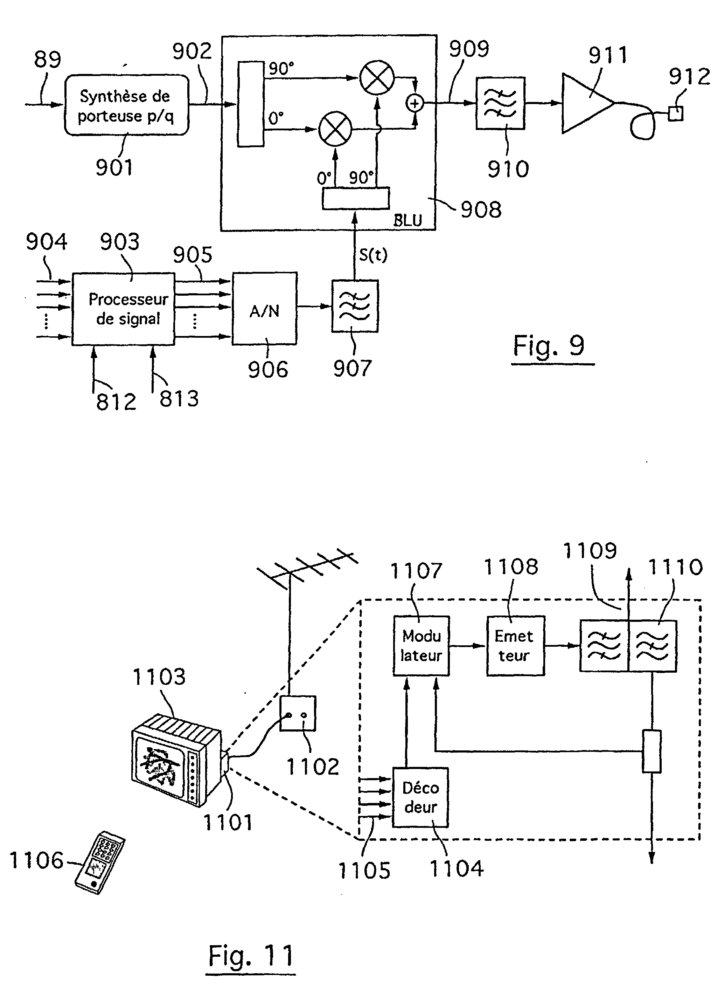

On décrit maintenant plus en détail un mode de réalisation particulier d'une station centrale (figures 5 à 7) et d'une station répartie (figures 8 et 9).

Les équipements de la station centrale comprennent deux sous-ensembles : un sous-ensemble d'émission et un sous-ensemble de réception. La figure 5 présente le sous-ensemble d'émission.

Cette station centrale doit d'une part assurer la transmission de données à destination des stations réparties, et d'autres part assurer trois fonctions spécifiques à l'invention :

- l'émission d'une fréquence pilote nécessaire à la synchronisation des porteuses du multiplex OFDM ;
- la transmission de la synchronisation du temps symbole ;
- la gestion des fréquences du multiplex OFDM, dans le cas où l'allocation des fréquences porteuses est variable (par exemple pour adapter le débit et/ou pour assurer une diversité en fréquence).

Les deux dernières informations peuvent être portées par la fréquence pilote.

Dans l'exemple de la figure 5, ces fonctions sont réalisées de la façon suivante :

- la fréquence pilote est constituée par la porteuse d'une modulation numérique linéaire (MDP $2^n$, MAQ $2^m$ par exemple). La modulation ne doit pas être exponentielle, car la porteuse sert au contrôle de fréquence ;
- la synchronisation du temps symbole est transmise par la trame d'un multiplexage temporel des informations véhiculées par cette modulation ;
- les informations concernant la répartition des fréquences sont contenues dans une partie des intervalles de temps (I.T.) de ce multiplex temporel. Le sous-ensemble d'émission comprend donc un multiplexeur 51 qui reçoit :

    - les informations $52_1$ à $52_n$ à transmettre aux I stations réparties, par l'intermédiaire d'un interface 53 ;
    - les informations $54_1$ à $54_n$ relatives à l'utilisation de fréquences porteuses, par l'intermédiaire d'un interface 55.

Ces informations $54_1$ à $54_n$ sont gérées par un microprocesseur 56, qui peut également contrôler le générateur d'horloges 57 et l'oscillateur local 58.

Le multiplexeur 51 combine ces différentes informations, et insère des séquences de marquage permettant de synchroniser le temps symbole $T_s$. La figure 6 est un exemple de la structure temporelle de ce signal 59.

Le temps symbole $T_s$ 61 correspond à une trame divisée en $2n + 1$ intervalles de temps, que l'on peut regrouper de la façon suivante :

- intervalles $IT_1$ à $IT_n$ : données de gestion des fréquences 62 : chaque intervalle $IT_i$ 63 porte l'information de la (ou des) porteuse affectée à la station I;
- intervalles $IT_{n+1}$ à $IT_{2n}$ : informations 64 destinées aux stations réparties : chaque intervalle $IT_{n+I}$ 65 porte les informations destinées à la station I;
- intervalle $IT_{2n+1}$ : séquence 66 de marquage de trame, donnant la synchronisation $T_s$.

Ce signal de modulation 59 alimente un modulateur linéaire 510 qui module une porteuse 511 générée par un oscillateur local 58 accordé sur la fréquence pilote.

Un générateur d'horloge 57 délivre au multiplexeur 51 les horloges suivantes :

- horloge $512_1$ donnant la fréquence des intervalles de temps IT ;
- horloge $512_2$ donnant la fréquence des symboles ($1/t'_s$) ;
- horloge $512_3$ donnant la fréquence bit, également délivrée au modulateur 510.

Ces horloges sont également dirigées (513) vers le sous-ensemble de réception, ainsi que la fréquence pilote (514). Le signal est ensuite filtré par un filtre 516, puis amplifié à un niveau suffisant pour l'application envisagée par un amplificateur de puissance 517, et il attaque l'antenne d'émission 518 qui le diffuse vers les stations réparties.

Le système décrit ci-dessus n'est, bien entendu, qu'un exemple et bien d'autres réalisations sont possibles. On peut ainsi utiliser un signal de télévision analogique classique (SECAM/PAL/NTSC) à l'émission vers les stations réparties. Dans ce cas :

- la fréquence pilote est constituée par la porteuse vision du signal TV ;
- la synchronisation du temps symbole est supportée par la synchronisation ligne et trame du signal TV ; la durée du temps symbole peut, par exemple, être égale à un multiple de la durée d'une ligne de télévision et à un sous-multiple de la durée d'une image ;

- les informations de gestion des fréquences, ainsi que celles destinées aux stations réparties, sont émises dans des paquets de télétexte insérés dans la suppression trame.

La figure 7 illustre le sous-ensemble de réception d'une station centrale. Ces équipements de réception assurent des fonctions classiques en réception (préamplification RF, filtrage, transposition en fréquence intermédiaire) ainsi que des fonctions plus spécifiques à la démodulation OFDM (échantillonnage, transformée de Fourier numérique, mise en mémoire tampon des informations envoyées par les stations réparties).

Plus précisément, le signal reçu par l'antenne de réception 71 est transmis à un module radiofréquence 72 comprenant un étage d'amplification 73 avec CAG et un étage de filtrage passe-bande 74.

Le signal 75 délivré par le filtre 74 subit ensuite une transposition 76 en fréquence intermédiaire réalisée à l'aide d'un oscillateur local 77 asservi à la fréquence pilote d'émission 714 (ou à l'oscillateur local du sous-ensemble d'émission).

Un module 78 complémentaire réalise une amplification 79 en fréquence intermédiaire et un filtrage passe-bande 710, de façon à délivrer un signal 711, qui est démodulé 722. Le spectre résultant est compris entre les fréquences $\Delta f/2$ et $(2N-1)\Delta f/2$. Le signal est alors échantillonné par le convertisseur analogique/numérique 712. Cet échantillonnage 712 est synchronisé avec le temps symbole $t'_s$ émis par la station centrale, est retardé par rapport au début de ce temps symbole de la durée $\Delta t$ de l'intervalle de garde et dure $t_s = t'_s - \Delta t$. Durant ce temps $t_s$, $2N$ échantillons sont prélevés, si N est le nombre de porteuses du multiplex OFDM. La fréquence d'échantillonnage est donc égale à $2N/t_s$ $(=2N\Delta f)$.

Les échantillons $V_k$ sont ensuite démodulés à l'aide d'une transformation de Fourier discrète 713 (selon la technique décrite par exemple dans le document "Data transmission by Frequency-Division Multiplexing using the Discrete Fourier Transform" ; S.B. Weinstein, P.M. Ebert, déjà cité) délivrant des coefficients $c_j$ stockés dans une mémoire tampon 714, et d'un démodulateur 715, qui effectue une démodulation différentielle ou synchrone.

Si le signal reçu est :

$$s(t) = \sum_{i=0}^{N-1} \{A_i \cos 2\pi[f_0 + \Delta f(i+1/2)]t + B_i \sin 2\pi[f_0 + \Delta f(i+1/2)]t\}$$

on effectue les opérations suivantes :

- démodulation (multiplication par $\cos 2\pi f_0 t$) et démodulation par filtrage des composantes autour de $2f_0$), délivrant :

$$s_1(t) = 1/2 \sum_{i=0}^{N-1} [A_i \cos 2\pi \Delta f(i+1/2)t + B_i \sin 2\pi \Delta f(i+1/2)t]$$

- transformation de Fourier de $s_1(t)$ :

$$S_1(\omega) = 1/2 \sum_{i=0}^{N-1} A_i\{\delta[\omega + \Delta\omega(i+1/2)] + \delta[\omega - \Delta\omega(i+1/2)]\}$$
$$+ B_i\{\delta[\omega + \Delta\omega(i+1/2)] - \delta[\omega - \Delta\omega(i+1/2)]\}$$
$$= 1/2 \sum_{i=0}^{n-1} (A_i + B_i)\delta[\omega + \Delta\omega(i+1/2)] + (A_i - B_i)\delta(\omega - \Delta\omega(i+1/2))$$

d'où Ai et Bi pour chaque porteuse, donc pour chaque station.

Dans la démodulation différentielle, deux échantillons successifs correspondant à la même porteuse sont comparés, d'où l'on déduit les bits qui ont été émis en fonction du codage utilisé, connu a priori de la station centrale.

Dans la démodulation synchrone, un symbole de modulation convenu est émis tous les n temps symbole, en synchronisme avec la trame distribuée par la station centrale. Cela permet d'estimer la phase de chacune des porteuses à ce moment là ; la phase de la porteuse considérée pendant les autres symboles est alors obtenue par comparaison avec ce symbole d'apprentissage et interpolation. Les bits émis sont ensuite estimés en fonction du coefficient $c_j$ considéré et de la phase ainsi reconstituée de la porteuse.

Les bits démodulés 716 sont alors rangés dans des mémoires $717_1$ à $717_i$ pour pouvoir reconstituer les messages émis par les stations réparties au fur et à mesure des symboles reçus. La gestion des mémoires est faite par un module 718 d'adressage des mémoires, en fonction de la répartition des fréquences entre ces stations :

- le cas le plus simple correspond à une répartition fixe selon le schéma: une station - une fréquence. Il y a alors un adressage fixe des bits démodulés à partir d'une porteuse vers une position de mémoire ;
- un autre cas possible est constitué par la situation fixe : une station - un sous-ensemble de fréquences réparties dans la bande. Il faut alors ordonner les bits en provenance des porteuses correspondantes avant de les ranger dans la mémoire attribuée à la station ;
- on peut également avoir un des deux cas précédents, mais avec une attribution de fréquence(s) aux stations variable à chaque temps symbole. L'adressage en mémoire des bits démodulés sur chaque porteuse varie donc en conséquence de symbole en symbole.

Les messages reconstitués émis par chaque station sont alors disponibles en vue de leur traitement 720.

Un microprocesseur 721 pilote la transformation 713, la mémoire tampon 714, le démodulateur 715 et le module d'adressage 718. Il reçoit l'horloge 513 générée par le module 57 générateur d'horloges (figure 5).

Deux équipements optionnels (non représentés) peuvent être ajoutés à la station de base :

- un module de gestion de l'égalisation des signaux. En effet, l'égalisation peut être nécessaire pour éviter les écarts de niveaux trop importants entre les porteuses du multiplex OFDM (supérieurs à la dynamique liée au nombre de bits alloués aux échantillons). Le protocole d'échange entre la station centrale et les stations réparties doit alors prévoir une phase d'ajustement des puissances d'émission des stations réparties, éventuellement à renouveler périodiquement si les canaux de transmission entre la station centrale et les stations réparties peuvent varier ;
- un module de codage de canal pour augmenter ses performances. L'opération de décodage sera alors associée à la modulation dans les stations réparties et le décodage correspondant prendra place entre la transformation de Fourier et la démodulation dans le récepteur de station centrale.

Bien que les figures 5 et 7 présentent des équipements raccordés à une antenne, il est clair que les stations de l'invention peuvent également être raccordé à un réseau de distribution par câble, quel que soit la nature de ces câbles (fibres optiques, câbles coaxiaux, paires symétriques,...).

Les équipements des stations réparties sont également scindés en deux sous-ensembles, un d'émission et un de réception, les deux étant associés à un contrôleur de processus à base de microprocesseur.

La figure 8 illustre le sous-ensemble de réception d'une telle station répartie. Il est connecté à une antenne de réception ou à un réseau câblé par le connecteur 81. Le signal reçu attaque un étage de radiofréquence 82 comprenant les fonctions d'amplification 83 avec CAG, de filtrage passe-bande 84.

Le signal 85 délivré par le module 82 est transmis à un étage 86 de transposition en fréquence intermédiaire et de démodulation, d'une part, et, par l'intermédiaire d'un coupleur 87, à un module 88 de récupération de fréquence pilote.

Cette récupération de pilote peut utiliser tout système adéquat compatible avec les caractéristiques du système : par exemple, un filtrage à bande étroite de la porteuse pilote reçu, ou un oscillateur synchronisé directement par le pilote, ou encore un oscillateur commandé en tension synchronisé sur la fréquence pilote à l'aide d'une boucle d'asservissement de phase. La fréquence pilote 89, une fois récupérée, est dirigée vers le sous-ensemble d'émission afin de servir à la synthèse de la porteuse émise par la station répartie.

L'étage à fréquence intermédiaire comprend une amplification avec CAG et un filtrage complémentaires de ceux effectués en radiofréquence, puis la démodulation du signal reçu de la station centrale.

Le signal démodulé 810 est démultiplexé 811 pour en extraire :

- les informations nécessaires à la récupération du temps symbole 812 et de la synchronisation de trame 813 éventuelle. Ces information, une fois récupérées, sont envoyées vers le sous-ensemble d'émission afin de servir à la synchronisation de la modulation de la porteuse émise et, s'il y a lieu, à la synchronisation des informations envoyées par la station répartie à la station centrale ;
- les informations relatives à la gestion des ressources temps/fréquence 814 (si le système prévoit que ces ressources peuvent varier) et, en particulier, celles relatives à la fréquence devant être utilisée par la station considérée. Cette information est transmise à un module 817 de gestion temps/fréquence, qui contrôle la synthèse de la porteuse émise ;

- éventuellement, si le système le prévoit, les informations relatives à l'égalisation 815 des niveaux reçus par la station centrale sont extraites de la même façon pour servir à ajuster 818 la puissance émise par la station répartie ;
- les informations 816 destinées à la station répartie, qui sont enfin décodées et traitées par un dernier module de décodage 819.

Dans le cas où un système d'égalisation des temps de propagation est utilisé, des informations supplémentaires peuvent être traitées par le système. Un module de radiolocalisation ou d'estimation des temps de propagation fournit à chaque station répartie deux informations :

- le temps de propagation aller-retour maximum entre la station centrale et la station la plus éloignée ;
- ce temps pour la station répartie considérée.

Ces données sont par exemple estimées en mesurant, dans la station centrale, les temps de réponse aux demandes d'égalisation. Par rapport à la synchronisation du temps symbole qu'elle aurait normalement utilisé, la station retarde alors cette dernière d'une durée égale à la différence entre ces deux temps de propagation.

La figure 9 présente le sous-ensemble d'émission d'une station répartie.

Il comprend un module 901 de synthèse de la porteuse de modulation 902 à partir de la fréquence pilote 89 récupérée par le sous-ensemble de réception. La fréquence de cette porteuse peut être égale à celle du pilote si le découplage entre les antennes d'émission et de réception est supérieur à l'écart entre les puissances émises et reçues. Sinon, les fréquences de la porteuse et du pilote sont dans un rapport rationnel p/q et la porteuse est obtenue à partir du pilote au moyen d'une des méthodes de synthèse de fréquence conventionnelles.

Cette porteuse 902 est ensuite modulée de façon synchrone avec les temps symbole récupérés par le récepteur. Deux cas doivent être considérés selon que le système prévoit l'utilisation, par les stations réparties, d'une seule fréquence, ou bien d'un sous-ensemble de fréquences du multiplex OFDM :

- dans le cas d'utilisation d'une seule fréquence, la modulation de la porteuse est réalisée de façon classique à l'aide d'un modulateur approprié au type de modulation choisi ;
- dans le cas de l'utilisation de plusieurs porteuses, on peut certes mettre en parallèle plusieurs synthétiseurs de fréquence et modulateurs tels que ceux ci-dessus. Il est sans doute plus avantageux de générer d'abord l'ensemble des sous-porteuses modulées à l'aide d'un processeur de signal, réalisant éventuellement une T.F.D. partielle, puis de moduler avec ce signal la porteuse principale en BLU, ainsi que cela est illustré en figure 9.

Dans ce cas, un processeur de signal 903 calcule d'abord sous forme numérique échantillonnée le signal résultant de l'ensemble des m sous-porteuses modulées 904 :

$$\delta(t-n\Delta t)\sum_{i=1}^{m}(A_i\cos\omega_i t+B_i\sin\omega_i t)$$

où Ai, Bi prennent leurs valeurs dans un sous-ensemble discret à $2^q$ termes et supportent l'information transmise par la station répartie.

Les échantillons 905 ainsi calculés passent ensuite dans un convertisseur numérique/analogique 906, puis sont filtrés par un filtre passe-bas 907 pour reconstituer le signal analogique.

Le signal obtenu, s(t), module la porteuse principale 902 à l'aide d'un modulateur à bande latérale unique 908, qui réalise l'opération :

$$E_s(t)=s(t)\cos\omega_0 t\mp\hat{s}(t)\sin\omega_0 t$$

où $\hat{s}(t)$ désigne le transformé de Hilbert de s(t) (déphasage de 90 ° sur la bande de fréquence occupée par s(t)) l'opération avec le signe "-" est réalisée si on veut sélectionner la bande latérale supérieure, avec le signe "+" sinon.

Le modulateur à bande latérale unique permet de transposer le spectre à transmettre autour de la porteuse, sans que cette dernière soit transmise.

Le signal modulé 909 est ensuite filtré par un filtre passe-bande 910, puis amplifié à un niveau suffisant par un amplificateur 911 pour être émis vers la station centrale. Le signal est enfin émis dans le milieu de propagation par l'intermédiaire de l'interface adéquat, antenne ou connecteur 912.

Les applications possibles du système de l'invention sont très variées : toute application ayant besoin d'un système d'accès multiple peut être envisagée. On peut, par exemple, citer :

- les réseaux de téléinformatique, particulièrement radioélectriques ;
- les réseaux de télécommunications à support partagé ;
- les voies de retour des réseaux de télédiffusion ;
- les voies de retour des réseaux de vidéocommunications ;
- le radiotéléphone ;
- les réseaux de domotique ;
- ...

Si on appelle :

- $\Delta T$ (secondes) la dispersion des temps de propagation ;
- d (bauds/s) le débit moyen d'information à transmettre par station répartie ;
- N le nombre de ces stations ;
- P (symboles) la taille des paquets d'information à transmettre, le débit total du système est alors égal à Nd (symboles/s) et la durée des paquets est égale à :

- P/Nd (secondes) dans un système AMRT ;
- P/d dans le système de l'invention.

On peut donc vérifier que le système proposé est particulièrement intéressant, par rapport à un système AMRT, dans les cas suivants :

- quand $\Delta T > P/Nd$ car on améliore l'efficacité spectrale du système. On pourrait, pour conserver l'AMRT, chercher à augmenter la durée des paquets. Cela est parfois possible dans des applications de téléinformatique. Cela ne l'est pas dans toutes les applications où des contraintes de temps réel interviennent : audiovisuel, télématique multimédia, certaines télémesures, etc...
- quand N est grand, car la puissance instantanée d'émission nécessaire est proportionnelle à d et non pas à Nd, comme en AMRT ;

A titre d'exemple de mise en oeuvre particulière de l'invention, on décrit ci-dessous une application pour la voie de retour d'un système de télévision, appelée dans ce cas rétrodiffusion.

La voie de rétrodiffusion permet de faire remonter des informations depuis l'utilisateur d'un téléviseur vers l'opérateur gérant le système de télévision. Elle peut par exemple servir à participer à des jeux interactifs ou à des sondages en direct, ou à sélectionner un programme,...

La station centrale est donc ici constituée par un centre émetteur de télédiffusion et les stations réparties, par les installations des téléspectateurs.

Si on estime qu'à un centre émetteur principal correspond une zone de service ayant un rayon de 60 km, la dispersion des temps de propagation aller-retour entre cet émetteur et les stations réparties va atteindre (2x60)/300000 = 400 $\mu$s. On choisit donc un temps de garde égal à cette valeur et un temps symbole d'une durée d'environ 4 ms, ce qui correspond à un espacement de 277,7 Hz entre porteuses orthogonales.

On suppose que l'installation d'usager émet vers l'émetteur, à travers une antenne de réception TV, sur une seule de ces porteuses, un signal modulé ayant cette largeur de bande, avec une modulation ayant une efficacité spectrale de 4 bits/Hz.

Si l'émetteur de télédiffusion, avec une puissance maximale de 25 kW, assure le service de télévision aux usagers qu'il dessert, la puissance maximale nécessaire à l'émission de rétrodiffusion du téléspectateur peut être évaluée comme suit :

- gain de bande : 5,58 MHz / 277,7 Hz $\approx$ 20 000 = 43 dB
- gain de modulation : $(C/N)_{TV}$ / $(C/N)_{num} \approx$ 35 - 18 = 17 dB
- puissance d'émission (25 kW = 74 dBm) : 74-60 = 14 dBm = 25 mW

Cette puissance d'émission est tout à fait à la portée d'une installation individuelle grand public.

La voie descendante, de l'émetteur vers les usagers, utilise le canal de radiodiffusion associé au service proposé. Par exemple, pour un jeu TV, des paquets télétexte multiplexés au programme semblent un support tout indiqué.

La figure 11 illustre un exemple d'équipement d'un usager individuel pour cette application.

Le terminal 1101 de rétrodiffusion d'un usager raccordé à une installation individuelle est installé entre la prise de sortie TV 1102 et le téléviseur 1103. Il se compose :

- d'un décodeur 1104 raccordé au téléviseur 1103 par la prise de péritélévision 1105. Il décode en mode télétexte les instructions de service (fréquence du pilote, fréquence d'émission à utiliser, synchronisation symbole, fenêtre temporelle d'émission). Il dialogue avec une télécommande 1106 pour déterminer les informations à émettre. Toutes ces données, une fois décodées, sont transmises à un modulateur 1107 ;

- le modulateur 1107 génère le signal de modulation en bande de base (typiquement quelques centaines de kHz) en synchronisme avec le temps symbole. Il synthétise la fréquence porteuse du canal de rétrodiffusion à partir de la fréquence pilote et la module par le signal précédent ;

- un émetteur 1108 amplifie le signal ainsi généré à un niveau suffisant et l'injecte sur l'antenne 1109 à travers le diplexeur passe-bande/coupe-bande 1110.

Si l'installation d'antenne d'usager comporte un préamplificateur, il sera nécessaire de shunter ce dernier par deux diplexeurs.

Pour augmenter le nombre de stations réparties, on fait appel à un multiplexage en temps (AMRT). Par ailleurs, il est souhaitable de prévoir, pour la mise en oeuvre d'un équipement d'usager, une phase de réglage de la puissance d'émission de façon que les niveaux reçus par l'émetteur central ne soient pas excessivement dispersés. Enfin, plusieurs débits d'usager doivent pouvoir être utilisés en fonctions des applications.

Avantageusement, le protocole de gestion de l'accès multiple comprend trois phases :

- un protocole de mise en service : lors de l'achat d'un terminal, le vendeur, par l'intermédiaire d'un serveur Minitel, par exemple, attribue un numéro d'identification (national, à ce stade) au terminal. Ce numéro correspond également à une fréquence et un intervalle de temps dans le canal de rétrodiffusion. Au cours de périodes consacrées à la prise en compte de nouveaux terminaux, pendant lesquelles le service n'est pas actif, les émetteurs sont à l'écoute de ces nouveaux terminaux sur les créneaux qui leur ont été attribués et ils envoient, sur la voie descendante, un message signifiant "veuillez augmenter votre puissance", associé, bien entendu, au numéro d'identification du terminal. En supposant que le terminal est correctement installé et alimenté, il va donc augmenter sa puissance jusqu'à recevoir le message "votre puissance est correcte ; je vous ai pris en compte ; votre fréquence et votre intervalle d'appel seront :...";

- un protocole d'appel : quand un jeu interactif est en cours (ou, plus généralement, une application interactive), un certain intervalle temps/fréquence est prévu, dans la trame diffusée par la voie descendante, pour la procédure d'appel. L'usager qui désire participer au jeu utilisera, dans cet intervalle, la fréquence et l'intervalle de temps qui lui ont été précédemment affectés par l'émetteur pour demander un numéro de session qui lui permettra de participer au jeu concerné ;

- un protocole de session : ce numéro correspond à nouveau à une fréquence et un intervalle de temps qui assurent à l'usager une ressource de transmission suffisante pour pouvoir transmettre vers l'émetteur les informations nécessaires au jeu (ou à l'application).

Avec un multiplexeur OFDM à 2048 porteuses et les hypothèses faites ci-dessus (un temps symbole de 4 ms et une modulation ayant une efficacité de 4 bits/Hz), les capacités du canal de rétrodiffusion sont les suivantes en fonction de l'application :

- applications à débit sporadique (jeux avec vote ou notation, programmes à embranchements) : on recherche dans ce cas à pouvoir traiter le plus de participants dans le moins de temps possible. Par exemple, supposons que la réponse du participant se traduise par l'émission de 4 octets, y compris la redondance due au codage. Le nombre de participants pouvant être pris en compte par seconde égal à :

$$(2048*4)/(32*4.10^{-3})=64000$$

- applications à débit continu faible (retour clavier, manette de jeu) : on cherche alors quel est le nombre maximal de participants possible. Par exemple, si on veut pouvoir remonter 8 octets utiles par seconde, soit 10 octets par seconde après codage, ce nombre maximal sera égal à :

**EP 0 641 096 B1**

$$(2048*4)/(80*4.10^{-3})=25600.$$

**Revendications**

**1.** Procédé d'accès multiple à une station centrale (11 ; SC) par un jeu d'au moins deux stations réparties ($12_1$ à $12_7$ ; SR1 à SR12), **caractérisé en ce qu'**il comprend les étapes suivantes :

- affectation (1001) à chacune desdites stations réparties (SR1 à SR12) d'au moins une fréquence porteuse ($22_1$ à $22_{12}$ ; $32_{1,1}$ à $32_{4,3}$) sélectionnée parmi une pluralité de fréquences porteuses orthogonales ;
- dans chacune desdites stations réparties, génération (1020), modulation (1031) et émission (1038) de manière synchronisée de chacune desdites fréquences porteuses qui lui est affectée par une succession d'éléments de modulation numériques représentatifs d'un signal source ;
- réception (1040), dans ladite station centrale, d'un signal unique (21 ; 31) correspondant au multiplex de fréquences orthogonales formé par l'ensemble des fréquences porteuses modulées et émises par ledit jeu de stations réparties (SR1 à SR12) ;
- démodulation (1040) dudit signal unique comprenant au moins une transformation mathématique temps-fréquence.

**2.** Procédé selon la revendication 1, **caractérisé en ce qu'**il comprend les étapes suivantes :

- utilisation par chacune desdites stations réparties d'une fréquence de référence unique (fp ; 1019), et
- synthèse (1020), dans chacune desdites stations réparties, de chacune desdites fréquences porteuses affectées (1021), à partir de ladite fréquence de référence (1019).

**3.** Procédé selon l'une quelconque des revendications 1 et 2, **caractérisé en ce qu'**il comprend les étapes suivantes :

- diffusion (1012) vers l'ensemble desdites stations réparties d'un signal de synchronisation unique (1022, 1030), et
- synchronisation (1023), dans chacune desdites stations réparties, de l'émission desdits éléments de modulation modulant chacune desdites fréquences porteuses affectées, à partir dudit signal de synchronisation (1022, 1030).

**4.** Procédé selon la revendication 3, **caractérisé en ce que** ledit signal de synchronisation porte au moins une des informations appartenant au groupe comprenant :

- une synchronisation symbole (1033), indiquant la durée et/ou l'instant de début d'émission de chacun desdits éléments de modulation, les éléments de modulation émis simultanément par l'ensemble desdites stations réparties formant un symbole de données constitué d'un multiplex de fréquences orthogonales, vu de ladite station centrale ;
- une synchronisation trame (1034), correspondant à une organisation en trames desdits symboles.

**5.** Procédé selon les revendications 2 et 3, **caractérisé en ce que** ladite fréquence de référence (fp) est modulée (1008) en modulation numérique linéaire par ledit signal de synchronisation (1005, 1029).

**6.** Procédé selon l'une quelconque des revendications 2 à 5, **caractérisé en ce que** ladite fréquence de référence et/ou ledit signal de synchronisation est un signal diffusé par un système appartenant au groupe comprenant :

- un signal de référence émis par ladite station centrale ;
- une fréquence porteuse d'un système de diffusion de signaux de son et/ou d'images ;
- une fréquence d'horloge d'un système de téléphonie ;
- une fréquence de référence d'un système de distribution du temps.

**7.** Procédé selon les revendications 4 et 6, **caractérisé en ce que** ledit signal de synchronisation est un signal de synchronisation de ligne et/ou de trame d'image d'un signal de télévision, et **en ce que** la durée d'un symbole est un multiple de la durée d'une ligne et/ou un sous-multiple de la durée d'une trame d'image.

17

**8.** Procédé selon l'une quelconque des revendications 1 à 7, **caractérisé en ce que** ladite étape d'affectation (1001) comprend les étapes suivantes :

- réorganisation de ladite affectation desdites fréquences porteuses ;
- diffusion vers l'ensemble desdites stations réparties d'une information (1010) représentative de l'affectation réorganisée.

**9.** Procédé selon la revendication 8, **caractérisé en ce que** ladite étape de réorganisation (1001) tient compte d'au moins un des critères appartenant au groupe comprenant :

- quantité d'information devant être émise par au moins une desdites stations réparties ;
- quantité d'information devant être émise par l'ensemble desdites stations réparties ;
- niveau de priorité affecté à au moins une desdites stations réparties ;
- capacité du canal de transmission, vu de ladite station centrale.

**10.** Procédé selon l'une quelconque des revendications 8 et 9, **caractérisé en ce que** ladite étape de réorganisation (1001) est cyclique.

**11.** Procédé selon l'une quelconque des revendications 1 à 10, **caractérisé en ce qu'**il comprend une étape de transmission (1011) de données de ladite station centrale vers au moins une desdites stations réparties.

**12.** Procédé selon la revendication 11, **caractérisé en ce que** ladite étape de transmission (1011) comprend au moins une des étapes appartenant au groupe comprenant :

- une étape de diffusion d'un signal numérique porté par une fréquence porteuse unique ;
- une étape de diffusion d'un signal numérique porté par un multiplex de fréquences porteuses orthogonales ;
- une étape de diffusion de données télétexte inclues dans un signal de télévision.

**13.** Procédé selon la revendication 11, **caractérisé en ce qu'**un unique multiplex de fréquences orthogonales est mis en oeuvre, les communications entre une station centrale et des stations réparties étant des communications à l'alternat.

**14.** Procédé selon l'une quelconque des revendications 1 à 13, **caractérisé en ce qu'**il comprend les étapes suivantes :

- affectation (1001) à chacune desdites stations réparties d'au moins un intervalle de temps sélectionné parmi une pluralité d'intervalles de temps formant un cycle de transmission ;
- émission (1038), par chacune desdites stations réparties, uniquement durant le ou les intervalles de temps de chaque cycle qui lui sont affectés.

**15.** Procédé selon l'une des revendications 1 à 14, **caractérisé en ce qu'**il comprend une étape d'égalisation (1025), dans au moins une desdites stations réparties, consistant à contrôler le niveau de puissance d'émission de façon que le signal unique reçu par ladite station centrale présente un niveau de puissance sensiblement homogène.

**16.** Procédé selon la revendication 15, **caractérisé en ce que** ladite étape d'égalisation comprend les étapes suivantes :

- émission (1002) régulière, par ladite station centrale, d'un signal (1003) de commande d'augmentation de puissance, vers une desdites stations réparties, tant que le niveau de puissance d'émission de celle-ci est insuffisant ;
- augmentation (1025) de la puissance d'émission, dans ladite station répartie, tant qu'elle reçoit ledit signal de commande d'augmentation de puissance.

**17.** Procédé selon l'une quelconque des revendications 1 à 16, **caractérisé en ce qu'**il comprend, dans au moins une station répartie, une étape d'estimation du temps de propagation (1023) des signaux entre une station centrale et ladite station répartie, délivrant une estimation de distance entre ladite station centrale et ladite station répartie.

**18.** Procédé selon la revendication 17, **caractérisé en ce que** ladite estimation de distance est utilisée dans au moins une des étapes appartenant au groupe comprenant les étapes suivantes :

- contrôle (1027) de la puissance d'émission ;
- contrôle (1023) des instants d'émission, de façon que ledit signal unique reçu par la station centrale soit constitué de fréquences porteuses modulées par lesdits éléments de modulation de façon sensiblement synchronisée.

**19.** Procédé selon l'une quelconque des revendications 1 à 18, **caractérisé en ce que** ladite étape d'affectation (1001) à chacune desdites stations réparties d'au moins une fréquence porteuse affecte une fréquence porteuse unique à chaque station répartie.

**20.** Procédé selon l'une quelconque des revendications 1 à 18, **caractérisé en ce que** ladite étape d'affectation (1001) à chacune desdites stations réparties d'au moins une fréquence porteuse affecte un jeu d'au moins deux fréquences porteuses à chaque station répartie.

**21.** Procédé selon la revendication 20, appliqué à un réseau de communication cellulaire comprenant au moins deux cellules géographiquement voisines, **caractérisé en ce que** ledit jeu d'au moins deux fréquences porteuses affecté à chaque station répartie dans une première cellule est choisi de façon à permettre la réutilisation desdites fréquences porteuses dans une seconde cellule voisine de ladite première voisine.

**22.** Procédé selon l'une quelconque des revendications 1 à 21, **caractérisé en ce qu'**il comprend, dans au moins une desdites stations réparties, une étape préalable de codage canal (1036), introduisant des redondances dans ledit signal source.

**23.** Station centrale comprenant des moyens pour mettre en oeuvre les étapes du procédé de l'une quelconque des revendications 1 à 22.

**24.** Station répartie comprenant des moyens pour mettre en oeuvre les étapes du procédé de l'une quelconque des revendications 1 à 22.

**25.** Système de communication à accès multiple, **caractérisé en ce qu'**il comprend au moins une station centrale selon la revendication 23 et au moins deux stations réparties selon la revendication 24.

**26.** Utilisation du procédé selon l'une quelconque des revendications 1 à 22 pour au moins une des applications appartenant au groupe comprenant :

- les réseaux de téléinformatique ;
- les réseaux de télécommunications ;
- les voies de retour des réseaux de télédiffusion ;
- les voies de retour des réseaux de vidéocommunications ;
- le radiotéléphone ;
- les réseaux de domotique ;
- les réseaux de radiocommunication.

**Patentansprüche**

**1.** Verfahren mit mehrfachem Zugang zu einer zentralen Station (11; SC) durch einen Satz von mindestens zwei verteilten Stationen ($12_1$ bis $12_7$; SR1 bis SR12), **dadurch gekennzeichnet, dass** es die folgenden Schritte umfasst:

- Zuordnung (1001) von mindestens einer Trägerfrequenz ($22_1$ bis $22_{12}$; $32_{1,1}$ bis $32_{4,3}$), die unter einer Vielzahl orthogonaler Trägerfrequenzen gewählt wurde, zu jeder der verteilten Stationen (SR1 bis SR12);
- in jeder der verteilten Stationen, Erzeugung (1020), Modulierung (1031) und Senden (1038) einer jeden ihr zugeordneten Trägerfrequenz in synchroner Weise durch eine Folge von digitalen Modulationselementen, die für ein Quellensignal repräsentativ sind;
- Empfang (1040) in dieser zentralen Station eines einzigen Signals (21; 31), das dem von der Menge der modulierten und vom Satz verteilter Stationen (SR1 bis SR12) gesendeten Trägerfrequenzen gebildeten Multiplex orthogonaler Frequenzen entspricht;

- Demodulierung (1040) des erwähnten einzelnen Signals, wobei dieser Vorgang mindestens eine mathematische Zeit-Frequenz Transformation umfasst.

**2.** Verfahren nach Anspruch 1, **dadurch gekennzeichnet, dass** es die folgenden Schritte umfasst:

- Verwendung einer einzigen Referenzfrequenz (fp; 1019) durch jede der verteilten Stationen und,
- Synthese (1020) einer jeden der betroffenen Trägerfrequenzen (1021) in jeder der verteilten Stationen, ausgehend von der Referenzfrequenz (1019).

**3.** Verfahren nach einem der Ansprüche 1 oder 2, **dadurch gekennzeichnet, dass** es die folgenden Schritte umfasst:

- Senden (1012) eines einzelnen Synchronisierungssignals (1022, 1030) zur Gesamtheit der verteilten Stationen und,
- Synchronisierung (1023), in jeder der verteilten Stationen, des Sendens der Modulierungselemente, die jede der betroffenen Trägerfrequenzen modulieren, ausgehend vom Synchronisierungssignal (1022, 1030).

**4.** Verfahren nach Anspruch 3, **dadurch gekennzeichnet, dass** das Synchronisierungssignal mindestens eine der Informationen aus der folgenden Gruppe trägt:

- eine Symbolsynchronisierung (1033), welche die Dauer und/oder den Zeitpunkt des Sendanfangs eines jeden der Modulierungselemente angibt, wobei die Modulierungselemente, die gleichzeitig von der Gesamtheit der verteilten Stationen gesendet werden, ein Datensymbol bilden, das, von der zentralen Station aus gesehen, aus einem Multiplex orthogonaler Frequenzen besteht;
- eine Rastersynchronisierung (1034), die einer Organisation der erwähnten Symbole nach Rastern entspricht.

**5.** Verfahren nach den Ansprüchen 2 und 3, **dadurch gekennzeichnet, dass** die Referenzfrequenz (fp) nach einer digitalen linearen Modulierung durch das Synchronisationssignal (1005, 1029) moduliert wird (1008).

**6.** Verfahren nach einem der Ansprüche 2 bis 5, **dadurch gekennzeichnet, dass** die Referenzfrequenz und/oder das Synchronisierungssignal ein Signal ist, das von einem der folgenden Gruppe angehörenden System gesendet wird:

- ein von der zentralen Station gesendetes Referenzsignal;
- eine Trägerfrequenz eines Sendesystems für Ton- und/oder Bildsignale;
- eine Taktfrequenz eines Telefonsystems;
- eine Referenzfrequenz eines Zeitverteilungssystems.

**7.** Verfahren nach den Ansprüchen 4 und 6, **dadurch gekennzeichnet, dass** das Synchronisierungssignal ein Synchronisierungssignal der Leitung und/oder eines Bildrasters eines Fernsehsignals ist und, dass die Dauer eines Symbols ein Vielfaches der Dauer einer Zeile und/oder, dass sie ein genauer Teiler der Dauer eines Bildrasters ist.

**8.** Verfahren nach einem der Ansprüche 1 bis 7, **dadurch gekennzeichnet, dass** der Zuordnungsschritt (1001) die folgenden Schritte umfasst:

- Reorganisation der Zuordnung der Trägerfrequenzen;
- Senden zur Gesamtheit der verteilten Stationen einer für die reorganisierte Zuordnung repräsentativen Information (1010).

**9.** Verfahren nach Anspruch 8, **dadurch gekennzeichnet, dass** der Reorganisationsschritt (1001) mindestens eines der Kriterien aus der folgenden Gruppe berücksichtigt:

- Informationsmenge, die von mindestens einer der verteilten Stationen gesendet werden muss;
- Informationsmenge, die von der Gesamtheit dieser verteilten Stationen gesendet werden muss;
- Prioritätsebene, die mindestens einer der verteilten Stationen zugeordnet ist;
- Kapazität des Sendekanals, von der zentralen Station aus gesehen.

**10.** Verfahren nach einem der Ansprüche 8 oder 9, **dadurch gekennzeichnet, dass** der Reorganisationsschritt (1001) zyklisch ist.

**11.** Verfahren nach einem der Ansprüche 1 bis 10, **dadurch gekennzeichnet, dass** es einen Übertragungsschritt (1011) der Daten von der zentralen Station zu mindestens einer der verteilten Stationen umfasst.

**12.** Verfahren nach Anspruch 11, **dadurch gekennzeichnet, dass** der Übertragungsschritt (1011) mindestens einen Schritt aus der folgenden Gruppe umfasst:

- einen Sendeschritt eines von einer einzelnen Trägerfrequenz getragenen digitalen Signals;
- einen Sendeschritt eines von einem Multiplex orthogonaler Trägerfrequenzen getragenen digitalen Signals;
- einen Sendeschritt von in einem Femsensignal enthaltenen Bildschirmtextdaten.

**13.** Verfahren nach Anspruch 11, **dadurch gekennzeichnet, dass** ein einziges Multiplex orthogonaler Trägerfrequenzen angewandt wird, wobei die Kommunikationen zwischen einer zentralen Station und verteilten Stationen alternierender Art sind.

**14.** Verfahren nach einem der Ansprüche 1 bis 13, **dadurch gekennzeichnet, dass** es die folgenden Schritte umfasst:

- jeder der verteilten Stationen wird mindestens ein Zeitintervall zugeordnet (1001), das unter einer Vielzahl von einen Sendezyklus bildenden Zeitintervallen gewählt wird;
- jede der verteilten Stationen sendet (1038) ausschließlich während dem Zeitintervall oder den Zeitintervallen eines jeden ihr zugeordneten Zyklus.

**15.** Verfahren nach einem der Ansprüche 1 bis 14, **dadurch gekennzeichnet, dass** es in mindestens einer der verteilten Stationen einen Ausgleichsschritt (1025) aufweist, der darin besteht, die Höhe der Sendeleistung so zu steuern, dass das einzige von der zentralen Station empfangene Signal einen in etwa homogenen Leistungspegel aufweist.

**16.** Verfahren nach Anspruch 15, **dadurch gekennzeichnet, dass** der Ausgleichschritt die folgenden Schritte umfasst:

- regelmäßiges Senden (1002) durch die zentrale Station eines Steuersignals (1003) für die Leistungserhöhung zu einer der verteilten Stationen, solange der Sendeleistungspegel dieser Station nicht ausreicht;
- Erhöhung (1025) der Sendeleistung in der erwähnten verteilten Station, solange sie das Steuersignal für die Leistungserhöhung empfängt.

**17.** Verfahren nach einem der Ansprüche 1 bis 16, **dadurch gekennzeichnet, dass** es in mindestens einer der verteilten Stationen einen Schritt zum Schätzen der Ausbreitungszeit (1023) der Signale zwischen einer zentralen Station und der betroffenen verteilten Station umfasst, der eine Schätzung der Entfernung zwischen der zentralen Station und der betroffenen verteilten Station liefert.

**18.** Verfahren nach Anspruch 17, **dadurch gekennzeichnet, dass** die erwähnte Schätzung der Entfernung bei mindestens einem Schritt aus der folgenden Gruppe angewandt wird:

- Steuerung (1027) der Sendeleistung;
- Steuerung (1023) der Sendezeitpunkte, so dass das von der zentralen Station empfangene Einzelsignal aus Trägerfrequenzen besteht, die von den in etwa synchronisierten Modulierungselementen moduliert werden.

**19.** Verfahren nach einem der Ansprüche 1 bis 18, **dadurch gekennzeichnet, dass** der Schritt (1001), bei dem jeder der verteilten Stationen mindestens eine Trägerfrequenz zugeordnet wird, jeder der verteilten Stationen eine einzige Trägerfrequenz zuordnet.

**20.** Verfahren nach einem der Ansprüche 1 bis 18, **dadurch gekennzeichnet, dass** der Schritt (1001), bei dem jeder der verteilten Stationen mindestens eine Trägerfrequenz zugeordnet wird, jeder der verteilten Stationen einen Satz von mindestens zwei Trägerfrequenzen zuordnet.

**21.** Verfahren nach Anspruch 20, angewandt auf ein Kommunikations-Zellennetzwerk, welches mindestens zwei geographisch benachbarte Zellen umfasst, **dadurch gekennzeichnet, dass** die Wahl des Satzes von mindestens zwei Trägerfrequenzen, der einer jeden in einer ersten Zelle verteilten Station zugeordnet wird, derart erfolgt, dass die Wiederverwendung dieser Trägerfrequenzen in einer zweiten, mit der ersten benachbarten Zelle, möglich ist.

22. Verfahren nach einem der Ansprüche 1 bis 21, **dadurch gekennzeichnet, dass** es in mindestens einer der verteilten Stationen über einen vorhergehenden Schritt zur Kanalkodierung (1036) verfügt, der Redundanzen im Quellensignal einfügt.

23. Zentrale Station, die über Mittel verfügt, um die Schritte des Verfahrens aus einem der Ansprüche 1 bis 22 anzuwenden.

24. Verteilte Station, die über Mittel verfügt, um die Schritte des Verfahrens aus einem der Ansprüche 1 bis 22 anzuwenden.

25. Kommunikationssystem mit mehrfachem Zugang, **dadurch gekennzeichnet, dass** es mindestens eine zentrale Station nach Anspruch 23 und mindestens zwei verteilte Stationen nach Anspruch 24 umfasst.

26. Einsatz des Verfahrens nach einem der Ansprüche 1 bis 22 bei mindestens einer der Anwendungen aus der folgenden Gruppe von Anwendungen:

- Telematiknetzwerke;
- Telekommunikationsnetzwerke;
- die Rücklaufwege von Funknetzwerken;
- die Rücklaufwege von Videokommunikationsnetzwerken;
- Funktelefone;
- Heimsystemnetzwerke;
- Funknetzwerke.


**Claims**

1. Process for multiple access to a central station (11; SC) by a set of at least two remote stations ($12_1$ to $12_7$; SR1 to SR12), **characterised in that** it comprises the following steps:

    - allocation (1001) to each one of said remote stations (SR1 to SR12) of at least one carrier frequency ($22_1$ to $22_{12}$; $32_{1,1}$ to $32_{4,3}$) selected from a plurality of orthogonal carrier frequencies;
    - in each of said remote stations, the generation (1020), modulation (1031) and transmission (1038) in a synchronised manner of each of said carrier frequencies, which is allocated to it by a succession of digital modulation elements representing a single signal source;
    - reception (1040), in said central station, of a single signal (21; 31) corresponding to the multiplex of orthogonal frequencies formed by the set of carrier frequencies modulated and transmitted by said set of remote stations (SR1 to SR12) ;
    - demodulation (1040) of said single signal, comprising at least one mathematical time/frequency transformation.

2. Process according to Claim 1, **characterised in that** it comprises the following steps:

    - use by each of said remote stations of a single reference frequency (fp; 1019), and
    - synthesis (1020), in each of said remote stations, of each of said allocated carrier frequencies (1021), from said reference frequency (1019).

3. Process according to any one of Claims 1 and 2, **characterised in that** it comprises the following steps:

    - broadcasting (1012) to the set of said remote stations of a single synchronisation signal (1022, 1030), and
    - synchronisation (1023), in each of said remote stations, of the transmission of said modulation elements modulating each of said allocated carrier frequencies, from said synchronisation signal (1022, 1030).

4. Process according to Claim 3, **characterised in that** said synchronisation signal carries at least one of the information items belonging to the group comprising:

EP 0 641 096 B1

- a synchronisation bit (1033), indicating the duration and/or the start instant of the transmission of each of said modulation elements, the modulation elements transmitted simultaneously by the set of said remote stations forming a data symbol comprised of a multiplex of orthogonal frequencies, seen from said central station;
- a frame synchronisation (1034), corresponding to an organisation into frames of said symbols.

**5.** Process according to Claims 2 and 3, **characterised in that** said reference frequency (fp) is modulated (1008) by linear digital modulation by said synchronisation signal (1005, 1029).

**6.** Process according to any one of Claims 2 to 5, **characterised in that** said reference frequency and/or said synchronisation signal is a signal that is broadcast by a system belonging to the group comprising:

- a reference signal transmitted by said central station;
- a carrier frequency of a system for broadcasting audio and/or video signals;
- a clock frequency of a telephony system;
- a reference frequency of a time distribution system.

**7.** Process according to Claims 4 and 6, **characterised in that** said synchronisation signal is a line and/or video frame synchronisation signal of a television signal, and **in that** the duration of a symbol is a multiple of the duration of a line and/or a submultiple of the duration of a video frame.

**8.** Process according to any one of Claims 1 to 7, **characterised in that** said allocation step (1001) comprises the following steps:

- reorganisation of said allocation of said carrier frequencies;
- broadcasting to the set of said remote stations of an information item (1010) representing the reorganised allocation.

**9.** Process according to Claim 8, **characterised in that** said reorganisation step (1001) takes into account at least one of the criteria belonging to the group comprising:

- quantity of information to be transmitted by at least one of said remote stations;
- quantity of information to be transmitted by the set of said remote stations;
- priority level allocated to at least one of said remote stations;
- capacity of the transmission channel, seen from the central station.

**10.** Process according to any one of Claims 8 and 9, **characterised in that** the reorganisation step (1001) is cyclical.

**11.** Process according to any one of Claims 1 to 10, **characterised in that** it comprises a step for data transmission (1011) from said central station to at least one of said remote stations.

**12.** Process according to Claim 11, **characterised in that** said transmission step (1011) comprises at least one of the steps belonging to the group comprising:

- a step for broadcasting a digital signal carried by a single carrier frequency;
- a step for broadcasting a digital signal carried by a multiplex of orthogonal carrier frequencies;
- a step for broadcasting teletext data included in a television signal.

**13.** Process according to Claim 11, **characterised in that** a single multiplex of orthogonal frequencies is implemented, the communications between a central station and remote stations being simplex communications.

**14.** Process according to any one of Claims 1 to 13, **characterised in that** it comprises the following steps:

- allocation (1001) to each one of said remote stations of at least one time interval selected from a plurality of time intervals forming one transmission cycle;
- broadcasting (1038), by each one of said remote stations, exclusively during the time interval or time intervals of each cycle which are allocated to it.

**15.** Process according to one of Claims 1 to 14, **characterised in that** it comprises an equalisation step (1025), in at

23

least one of said remote stations, consisting in controlling the transmission power level in such a way that the single signal received by said central station has a power level that is approximately homogeneous.

16. Process according to Claim 15, **characterised in that** said equalisation step comprises the following steps:

   - regular transmission (1002) by said central station of a power increase command signal (1003), to one of said remote stations, as long as the transmission power level of the latter is inadequate;
   - increase (1025) in the transmission level, in said remote station, as long as it receives said power increase command signal.

17. Process according to any one of Claims 1 to 16, **characterised in that** it comprises, in at least one remote station, a step for estimating the propagation time (1023) between a central station and said remote station, supplying an estimation of the distance between said central station and said remote station.

18. Process according to Claim 17, **characterised in that** said distance estimation is used in at least one of the steps belonging to the group comprising the following steps:

   - transmission power control (1027) ;
   - control (1023) of the transmission instants, in such a way that said single signal received by the central station is composed of carrier frequencies modulated by said modulation elements in an approximately synchronised manner.

19. Process according to any one of Claims 1 to 18, **characterised in that** said step (1001) for allocating to each one of said remote stations at least one carrier frequency, allocates a single carrier frequency to each remote station.

20. Process according to any one of Claims 1 to 18, **characterised in that** said step (1001) for allocating to each one of said remote stations at least one carrier frequency, allocates a set of at least two carrier frequencies to each remote station.

21. Process according to Claim 20, applied to a cellular communication network comprising at least two geographically adjacent cells, **characterised in that** said set of at least two carrier frequencies allocated to each remote station in a first cell is chosen so as to permit the re-use of said carrier frequencies in a second cell that is adjacent to said first cell.

22. Process according to any one of Claims 1 to 21, **characterised in that** it comprises, in at least one of said remote stations, a preliminary coding channel (1036), introducing redundancies into said signal source.

23. Central station containing means for implementing the steps of the process of any one of Claims 1 to 22.

24. Remote station containing means for implementing the steps of the process of any one of Claims 1 to 22.

25. Multiple access communication system, **characterised in that** it comprises at least one central station according to Claim 23 and at least two remote stations according to Claim 24.

26. Use of the process according to any one of Claims 1 to 22 for at. least one of the applications belonging to a group comprising:

   - data communications networks;
   - telecommunications networks;
   - backward channels of radio/television broadcast networks;
   - backward channels of video communication networks;
   - mobile phone;
   - home automation networks;
   - radio communication networks.

Fig. 1A

Fig. 1B

Fig. 2

Fig. 3

Fig. 4

Fig. 5

Fig. 6

Fig. 7

Fig. 8

Fig. 9

Fig. 11

Fig. 10

I - STATION CENTRALE

II - STATION REPARTIE

EP 0 641 096 B1